Europäisches Patentamt

European Patent Office

Office européen des brevets

(19)

(11) Veröffentlichungsnummer: **0 317 664 B1**

# EUROPÄISCHE PATENTSCHRIFT

(12)

(45) Veröffentlichungstag der Patentschrift: **04.03.92**

(51) Int. Cl.⁵: **G01L 9/00**

(21) Anmeldenummer: **87117563.4**

(22) Anmeldetag: **27.11.87**

(54) **Messzelle, insbesondere für Relativ- und Differenzdruckmessungen.**

(43) Veröffentlichungstag der Anmeldung:
**31.05.89 Patentblatt 89/22**

(45) Bekanntmachung des Hinweises auf die
Patenterteilung:
**04.03.92 Patentblatt 92/10**

(84) Benannte Vertragsstaaten:
**CH DE FR GB LI**

(56) Entgegenhaltungen:
**EP-A- 0 033 749      EP-A- 0 140 992**
**EP-A- 0 202 786      DE-A- 2 630 640**
**DE-A- 2 807 704      DE-A- 3 344 799**

**J. TICHY et al.: "Piezoelektrische Messtechnik", Seiten 184-196, Springer Verlag, Berlin,
Heidelberg, New York 1980**

(73) Patentinhaber: **Kristal Instrumente AG**
**Eulachstrasse 22**
**CH-8408 Winterthur(CH)**

(72) Erfinder: **Wenger, Alfred, Dr. Phys.**
**Wieshofstrasse 58**
**CH-8408 Winterthur(CH)**
Erfinder: **Tanner, René**
**Forrenbergstrasse 8**
**CH-8472 Seuzach(CH)**
Erfinder: **Vanyo, Stefan**
**Schlossbergstrasse 5**
**CH-8408 Winterthur(CH)**

(74) Vertreter: **Schmidt, Horst, Dr.**
**Siegfriedstrasse 8**
**W-8000 München 40(DE)**

EP 0 317 664 B1

## Beschreibung

Die Erfindung betrifft eine Messzelle, insbesondere für Relativ- oder Differenzdruckmessungen, die ein Wandlerelement mit einer elektromechanischen druckempfindlichen Messmembran und einer von Sockelstiften zur Energiezufuhr und Signalableitung durchsetzten Trägerplatte aufweist. Die Erfindung bezieht sich insbesondere, jedoch nicht ausschliesslich auf piezoresistive Druckmesszellen.

Die Entwicklung und Anwendung von Druckaufnehmern auf Basis eines Halbleitermaterials mit z.B. eindiffundierten Widerständen haben in diesem Jahrzehnt eine umfassende Bedeutung erlangt. Das Wandlerelement solcher Druckaufnehmer besteht im wesentlichen aus einer auf einer Zwischenplatte, beispielsweise aus Glas, angeordneten Platte aus vorzugsweise Silizium (Si), an der ein elastischer Membranbereich ausgebildet ist, der unter dem einwirkenden Messdruck eine Durchbiegung erfährt. An den Stellen mit den höchsten Radial- und Tangentialspannungen sind an dem Membranbereich die Widerstände befestigt bzw. eindiffundiert, die in bekannter Weise zu vollen oder halben Messbrücken geschaltet sind. Diese Wandlerelement kann ergänzt werden durch eine Basisplatte mit angenähert demselben thermischen Ausdehnungskoeffizienten, vorzugsweise ebenfalls aus Silizium, wobei eine sogenannte tensosymmetrische Messzelle entsteht, die sich dadurch auszeichnet, dass zwischen Membran- und Zwischenplatte bei Temperaturänderungen entstehende Spannungen durch die Temperaturbewegung der Basisplatte mindestens teilweise kompensiert werden. Ein solches Wandlerelement ist beschrieben im Europatent Nr. 0 140 992. Es ist ebenfalls gängige Technik, und beispielsweise ebenfalls im genannten Patent beschrieben, das Wandlerelement auf einem am Aufnehmergehäuse fixierten, sockelartigen Trägerelement zu montieren und die Energiezufuhr für die Messzelle sowie die Signalableitung über Sockelstifte erfolgen zu lassen, welche durch das Trägerelement hindurchgeführt und an ihrem oberen Ende beispielsweise durch Golddrähte mit den Widerständen des Membranteiles verbunden sind.

Grundsätzlich werden zwei Arten von Druckaufnehmern unterschieden: Absolutdruck- und Differenzdruckaufnehmer. Da der Absolutdruck sich immer auf Vakuum bezieht, muss die Messzelle bei dieser Anwendung evakuiert sein. Die bereits genannte Membranplatte des Wandlerelements erfährt nur einen Aussen-, aber keinen Innendruck. Anders ist es bei einer Differenzdruckmessung. Hier erfährt die Membranplatte auch einen Druck von innen, der über ein Druckleitungsrohr zugeführt wird. Die Durchbiegung der Membran und damit das elektrische Signal sind dann ein Mass für die Druckdifferenz. Ist einer der beiden Drücke der gerade herrschende Umgebungsdruck, so spricht man von Relativdruckmessung. Die hier verwendeten Begriffe können beispielsweise gefunden werden in "Piezoelektrische Messtechnik" von J. Tichy und G. Gautschi, Seite 184 ff, die Messprinzipien für Absolut-und Differenzdruck sind beispielsweise im bereits genannten Europapatent Nr. 0 140 992 beschrieben.

Sowohl bei Absolut- wie bei Differenz- oder Relativdruckmessung muss hervorragende Dichtheit der Messzelle verlangt werden, weil selbstverständlich jegliches Eindringen von Gas oder Flüssigkeit das Messergebnis verfälscht. Eine für die meisten Anwendungsfälle genügende Dichtheit kann beispielsweise durch Lötverbindungen zwischen den einzelnen Platten (z.B. Membranplatte, Zwischenplatte, Basisplatte) des Wandlerelements erreicht werden. Diese Verbindung kann z.B. mittels eines Gold-Siliziumeutektikum-Lötprozesses oder mittels eines niederschmelzenden Glaslotes erfolgen, wie in der DE-A-2 630 640 beschrieben. Dieser Verbindungsvorgang ist relativ zeitaufwendig und teuer. Aus diesem Grunde wurden andere Lösungswege beschritten, beispielsweise durch Herstellung der genannten Verbindungen mittels Kunststoff, z.B. Silikonkautschuk. Eine derartige Verbindungstechnik wird aufgeführt in der europäischen Patentschrift 0 033 749. Ein Vorteil dieser Klebschicht besteht darin, dass sie elastisch auf Dehnung und Scherung reagiert, wodurch nur geringe, z.B. bei schwankenden Temperaturen auftretende Deformationskräfte auf die Messmembran übertragen werden. Ein weiterer Lösungsweg wird beschrieben in der EPA 0 202 786. Das hier zweiteiliges piezoresistives Wandlerelement wird front- und rückseitig, d.h. auf der Membran- und Basisseite, zusammengehalten durch ringförmige Kunststoffstempel aus elastomerem Material, welche mit Membran- und Basisplatte ultraschallverschweisst sind. Es ist hier zu bemerken, dass eine Druckbeanspruchung der Membranplatte, wie sie hier unter Umständen auftreten könnte, zu parasitären mechanischen Spannungen führen kann, welche das Messresultat verfälschen. In der Patentschrift CH 634 147 wird ferner das Wandlerelement durch spannzangenartig ausgebildete Sockelstifte an ihrem membranseitigen Ende festgehalten. Auch eine Fixierung des Wandlerelements an demselben Ende mittels Winkelprofilstücken wird dargestellt. Beide Konstruktionen können dazu führen, dass die Membranplatte durch parasitäre mechanische Spannungen deformiert wird.

Ungenügende Dichtheit der Messzelle tritt vor allem bei Differenz- und Relativdruckmessungen auf, indem dadurch, dass die Membranplatte auch von innen druckbeansprucht wird, evt. auch durch Wechselbeanspruchung, die einzelnen Teile des Wandlerelements voneinander gelöst werden können und diese dadurch undicht wird. Es ist die Aufgabe der vorliegenden Erfindung, die oben genannten Dichtheitsprobleme auf rationelle Art zu lösen unter Beachtung der Bedingung, dass die empfindlichen Bereiche der Membranplatte durch parasitäre mechanische Spannungen nicht oder nur unwesentlich beeinflusst werden.

Diese Aufgabe wird gelöst durch Vorsehen eines an den Sockelstiften befestigten isolierenden Klemmteiles zur Verspannung eines von der Messmembran abgewandten Montageteiles des Wandlerelements gegenüber der Trägerplatte unter Zwischenanordnung einer elastischen Klebschicht zwischen Montageteil und Trägerplatte.

Das Wandlerelement und insbesondere dessen Montageteil wird durch das Klemmteil, das aus einem Keramikmaterial bestehen kann, auf der Trägerplatte durch eine permanente Druckkraft fixiert, ohne dass die empfindliche Messmembran hierdurch beeinflusst wird. Dabei schafft die elastische Klebschicht eine mechanische Entkopplung der Messzelle von der Trägerplatte. Wenn das Wandlerelement aus einer die Messmembran aufweisenden Membranplatte, einer Zwischenplatte und einer Basisplatte besteht, kann gemäss einer Weiterbildung der Erfindung die Basisplatte als Montageteil ausgebildet sein. Dabei kann das Klemmteil gemäss einer anderen Weiterbildung der Erfindung in Eingriff mit einem vom Wandlerelement abstehenden kragenartigen Bereich des Montageteiles bzw. der Basisplatte stehen. Nach einer anderen Weiterbildung hat das Montageteil bzw. die Basisplatte mit dem davon abstehenden Bereich eine auf die Klebschicht abgestimmte Flächenausdehnung. Bei Anordnung der Messzelle in einem Druckaufnehmer kann das Klemmteil zugleich als Füllstück für den mit einem Druckübertragungsmedium gefüllten inneren Raum des Aufnehmergehäuses ausgebildet sein. Schliesslich zeichnet sich eine Weiterbildung der Erfindung dadurch aus, dass das Klemmteil metallisierte Aussparungen zur Aufnahme der Sockelstifte aufweist und mit metallischen Anschlussflächen für Verbindungsdrähte versehen ist.

Die Erfindung wird nachfolgend anhand der Zeichnung und einer bevorzugten Ausführungsform näher erläutert.

Fig. 1    in geschnittener Ansicht eine erfindungsgemäss aufgebaute Messzelle in Verbindung mit einem in schematischer fragmentarischer Ansicht gezeigten Aufnehmergehäuse,

Fig. 2    eine perspektivische geschnittene Teilansicht einer modifizierten Ausführungsform der Messzelle.

Das Wandlerelement der besteht in an sich bekannter Weise aus einer Membranplatte 1, einer Zwischenplatte 2 und einer Basisplatte 3. Die Erfindung ist jedoch auf einen derartigen Aufbau des Wandlerelements nicht beschränkt. Zwischen der Basisplatte 3 und einer Trägerplatte 6 ist eine elastische Klebschicht 4 vorgesehen, die das Wandlerelement mit der Trägerplatte 6 verbindet. Die Trägerplatte 6 kann ihrerseits über einen nicht näher bezeichneten Gehäuseabsatz mit einem Gehäuse 10 verbunden sein. Die Trägerplatte 6 enthält Glasdurchführungen 8 für Sockelstifte 7, welche an ihrem oberen Ende über Verbindungsdrähte 9 mit den nicht gezeigten Kontaktstellen der eindiffundierten Widerstände verbunden sind. Der Innenraum 12 des Gehäuses 10 ist vorzugsweise mit einem Druckübertragungsmedium, z.B. einer Flüssigkeit, gefüllt und gegen aussen mit einer Stahlmembran 11 oder dgl. abgeschlossen. Bei der gezeigten Messzelle für Relativ- oder Differenzdruckmessungen ist ein Druckleitungsrohr zentral durch die Trägerplatte 6 und die Messzelle geführt, um die Unterseite der Messmembran mit einem Druck beaufschlagen zu können. An einem ring- oder plattenförmigen isolierenden Klemmteil 5, welches vorzugsweise aus einem Keramikmaterial besteht, sind die Sockelstifte 7 in geeigneter Weise, z.B. durch Kleben oder Löten, befestigt. Das Klemmteil 5 steht erfindungsgemäss mit der Basisplatte 3, insbesondere mit davon über das Wandlerelement seitlich nach aussen abstehenden kragenförmigen Bereichen in Eingriff, um das Wandlerelement mit der Trägerplatte 6 zu verspannen, indem das Klemmteil auf die Basisplatte 3 eine permanente Druckkraft ausübt, die über die Sockelstifte 7 aufgebracht werden kann. Das Klemmteil 5 vermindert darüber hinaus das Volumen an erforderlichem Druckübertragungmedium im Innenraum 12 des Gehäuses 10.

Die Basisplatte 3 stellt bei der bevorzugten Ausführungsform der Erfindung gleichzeitig das Montageteil zum Verspannen des Wandlerelements mit der Trägerplatte 6 dar. Es versteht sich jedoch, dass die Erfindung auf eine derartige Ausbildung des Montageteiles nicht beschränkt ist, sondern auch ein integral am Wandlerelement angeformter Montageansatz oder ein gesondertes Montageteil zur Fixierung des Wandlerelements auf der Trägerplatte vorgesehen werden können. Von Bedeutung ist lediglich, dass die Druckkraft auf einen Teil der Messzelle ausgeübt wird, der in ausreichendem Abstand von der empfindlichen Membran der Membranplatte 1 steht. Auf diese Weise lassen sich, anders als bei Konstruktionen, bei denen zur Fixierung des Wandlerelements die Kraft auf deren oberen Bereich einwirkt, eine Übertragung parasitärer Spannungen auf die empfindliche Messmembran und damit eine Verfälschung der Messresultate verhindern. Das Klemmteil 5 kann einstückig oder mehrteilig ausgebildet sein. Beispielsweise kann das Klemmteil 5 in Gestalt von hohlzylinderförmigen Körpern, die die einzelnen Sockelstifte 7 umgeben, ausgebildet sein. Die mit dem Gehäuse 10 über den Gehäuseabsatz fest verbundene Trägerplatte 6 ist bei der Montage des Aufnehmers, bei dessen Einbau beispielsweise in einen Druckbehälter, aber auch während des Betriebes, den verschiedensten mechanischen Beanspruchungen unterworfen. Die dadurch verursachten Deformationen dürfen sich nicht auf das Wandlerelement übertragen, weil dadurch ebenfalls die empfindliche Membranplatte 1 auf schädliche Weise beeinflusst werden könnte. Erfindungsgemäss dient eine elastische Schicht 4 aus Kunststoff der mechanischen Entkoppelung des Wandlerelements von der Trägerplatte 6. Im Gegensatz dazu sind die Platten, welche als Ganzes das Wandlerelement bilden, vorzugsweise anodisch miteinander verbunden. Dies ist eine feste, unelastische Verbindung, welche bei jeder in der Praxis vorkommenden Druckbelastung dicht bleibt.

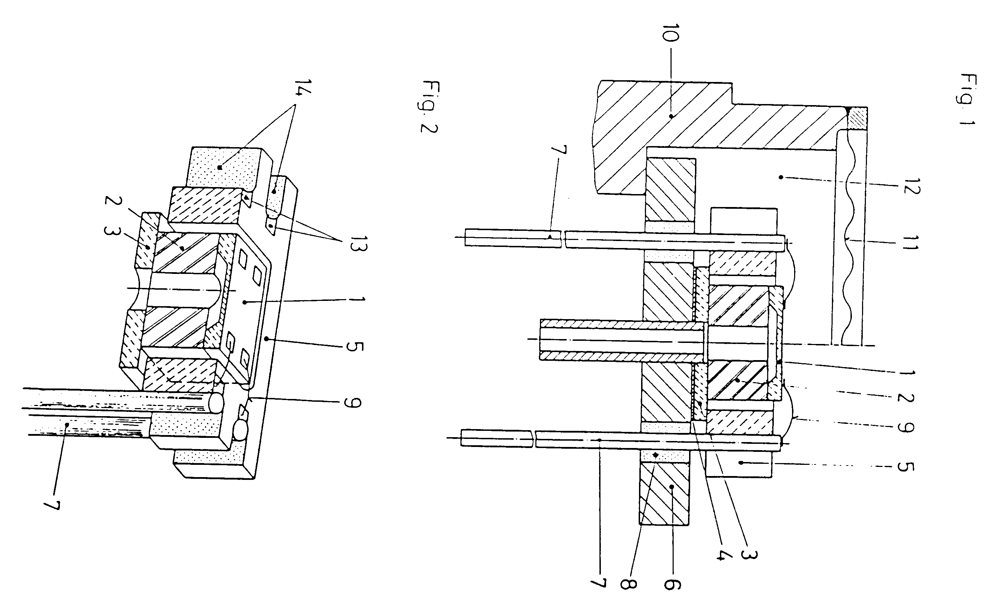

Figur 2 zeigt eine modifizierte Ausführungsform der Messzelle. Die Aussparungen 14 des Klemmteiles 5, in welchen die Sockel stifte 7 liegen, sind hier metallisiert, also elektrisch leitend. Sie sind verbunden mit ebenfalls metallisierten Anschlussflächen 13, welche sich an der Aussenfläche des Klemmteiles 5 befinden. Anstatt dass die Verbindungsdrähte 9 mit den Sockelstiften 7 direkt verbunden werden, wie bei Fig. 1, werden die genannten Verbindungsdrähte mit den Anschlussflächen 13 z.B. durch Löten, verbunden. Diese elektrische Verbindungs- und Kontakttechnik ist in gewissen Fällen rationeller als die in Fig. 1 dargestellte.

Der dargestellte Messzelle besteht aus einfach herstellbaren Bestandteilen, die auf rationelle Weise montiert werden können. Durch die oben beschriebene erfindungsgemässe Art der mechanischen Fixierung des Wandlerelements auf der Trägerplatte 6 mittels einer permanent wirkenden Druckkraft sowie durch die mechanische Entkoppelung von der Trägerplatte 6 wird eine einwandfreie Druckmessung, insbesondere Relativ- und Differenzdruckmessung, ermöglicht. In den Figuren 1 und 2 dargestellt und oben beschrieben wurden bevorzugte Ausführungsformen der Erfindung. Selbstverständlich ist diese auf andere Ausführungsformen piezoresistiver Wandlerelement mit spannungsempfindlichen Membranplatten, die in einem Gehäuse gehaltert werden müssen, übertragbar. Beispielsweise kann das Wandlerelement aus weniger als den dargestellten drei Platten bestehen, sie könnte sogar einstückig sein und an dem der Membran abgewandten Ende einen Absatz aufweisen, der durch das Klemmteil auf der Trägerplatte fixiert wird. Ferner braucht es sich bei der Messzelle nicht um eine piezoresistiv wirkende Anordnung zu handeln. Vielmehr kann die Erfindung auch bei kapazitiven Messzellen oder solchen auf

Basis von Dehnungsmessstreifen angewandt werden.

## Patentansprüche

1. Messzelle, insbesondere für Relativ- oder Differenzdruckmessungen, die ein Wandlerelement mit einer elektro-mechanischen druckempfindlichen Messmembran und einer von Sockelstiften (7) zur Energiezufuhr und Signalableitung durchsetzten Trägerplatte (6) aufweist, gekennzeichnet durch ein an den Sockelstiften (7) befestigtes isolierendes Klemmteil (5) zur Verspannung eines von der Messmembran abgewandten Montageteiles (3) des Wandlerelements gegenüber der Trägerplatte (6) unter Zwischenanordnung einer elastischen Klebschicht (4) zwischen Montageteil und Trägerplatte.

2. Messzelle nach Anspruch 1, dadurch gekennzeichnet, dass das Klemmteil (5) aus einem Keramikmaterial besteht.

3. Messzelle nach Anspruch 1 oder 2, mit einem Wandlerelement bestehend aus einer die Messmembran aufweisenden Membranplatte (1), einer Zwischenplatte (2) und einer Basisplatte (3), dadurch gekennzeichnet, dass die Basisplatte (3) als Montageteil ausgebildet ist.

4. Messzelle nach Anspruch 1, 2 oder 3, dadurch gekennzeichnet, dass das Klemmteil (5) in Eingriff mit vom Wandlerelement abstehenden kragenartigen Bereichen des Montageteiles bzw. der Basisplatte (3) steht.

5. Messzelle nach einem der vorhergehenden Ansprüche, dadurch gekennzeichnet, dass das Montageteil bzw. die Basisplatte (3) mit den abstehenden Bereichen eine auf die Klebschicht (4) abgestimmte Flächenausdehnung hat.

6. Messzelle nach einem der vorhergehenden Ansprüche, dadurch gekennzeichnet, dass das Klemmteil (5) als Füllstück für den mit einem Druckübertragungsmedium gefüllten Innenraum (12) eines Aufnehmergehäuses (10) ausgebildet ist.

7. Messzelle nach einem der vorhergehenden Ansprüche, dadurch gekennzeichnet, dass das Klemmteil (5) metallisierte Aussparungen (14) zur Aufnahme der Sockelstifte (7) aufweist und mit metallischen Anschlussflächen (13) für Verbindungsdrähte (9) versehen ist.

## Claims

1. Measuring cell, especially for relative or differential pressure measurements, with an electromechanical pressure-sensitive measuring diaphragm and a carrier plate (6) penetrated by base pins (7) for supplying energy and leading away signals, characterized by an insulating clamp part (5) fixed to the base pins (7) for bracing a mounting part (3) of the measuring cell facing away from the measuring diaphragm against the carrier plate (6), with an elastic adhesive layer (4) provided between the mounting part and carrier plate.

2. Measuring cell according to Claim 1, characterized by the clamp part (5) being of ceramic material.

3. Measuring cell according to Claim 1 or 2, consisting of a diaphragm plate (1) with the measuring diaphragm, an intermediate plate (2) and a base plate (3), characterized by the base plate (3) being in the form of a mounting part.

4. Measuring cell according to Claim 1, 2 or 3, characterized by the clamp part (5) engaging collar-like areas projecting from the mounting part i.e. base plate (3).

5. Measuring cell according to one of the preceding claims, characterized by the mounting part i.e. base plate (3) with its projecting areas having a surface matched to the adhesive layer (4).

6. Measuring cell according to one of the preceding claims, characterized by the clamp part (5) having the form of a filling piece for the inner cavity (12) of a transducer housing (10) filled with a pressure transmission medium.

7. Measuring cell according to one of the preceding claims, characterized by the clamp part (5) having metallized recesses (14) to accommodate the base pins (7) and being provided with metallic connecting surfaces (13) for connecting wires (9).

## Revendications

1. Cellule de mesure, essentiellement pour mesures de pressions différentielles avec une membrane de mesure électro-mécanique sensible en pression et une plaque-support (6) traversée par des goujons (7) permettant l'alimentation en énergie et la transmission du signal, caractérisée par une pièce de serrage isolante (5) fixée aux goujons (7) pour le serrage d'une pièce de montage (3) indépendante de la membrane de mesure sur la plaque-support (6) en intercalant une couche de colle élastique (4) entre pièce de montage et plaque-support.

2. Cellule de mesure selon revendication 1 caractérisée par le fait que la pièce de serrage (5) est réalisée en matériau céramique.

3. Cellule de mesure selon revendications 1 et 2 composée d'une plaque-membrane (1) comportant une membrane de mesure, d'une plaque intermédiaire (2) et d'une plaque de base (3) caractérisée par le fait que la plaque de base (3) constitue en même temps la pièce de montage.

4. Cellule de mesure selon revendications de brevet 1, 2, ou 3 caractérisée par le fait que la pièce de serrage (5) est en prise avec une partie de la pièce de montage resp. de la plaque de base (3) en forme de collerette débordant de la cellule de mesure.

5. Cellule de mesure selon l'une des revendications précédentes caractérisée par le fait que la pièce de montage resp. la plaque de base (3) avec ses parties débordantes présente une dilatation en surface compatible et accordée à la couche de colle (4).

6. Cellule de mesure selon l'une des revendications précédentes caractérisée par le fait que la pièce de serrage (5) est constituée en pièce de remplissage de façon à occuper le plus grand volume possible de la cavité interne (12) du boîtier de capteur (10) remplie de fluide de transmission de pression.

7. Cellule de mesure selon l'une des revendications de brevet précédentes caractérisée par le fait que la pièce de serrage (5) possède des évidements métallisés (14) destinés au passage des goujons (7) et est munie de faces de contract métalliques (13) pour les fils de connexion.

Fig. 1

Fig. 2